(19) Europäisches Patentamt
European Patent Office
Office européen des brevets

(11) **EP 0 596 241 B1**

(12) **EUROPEAN PATENT SPECIFICATION**

(45) Date of publication and mention
of the grant of the patent:
**22.07.1998 Bulletin 1998/30**

(51) Int Cl.⁶: **G05B 19/414**, G05B 19/416

(21) Application number: **93115434.8**

(22) Date of filing: **24.09.1993**

(54) **High precision trajectory tracking control circuit using multi-axial coordination**

Steuerungsschaltung für hochpräzise Bahnverfolgung welche eine multiaxiale Koordination verwendet

Circuit de commande de suivit de trajectoire très précise utilisant une coordination multi-axiale

(84) Designated Contracting States:
**DE FR GB**

(30) Priority: **25.09.1992 JP 256667/92**
**21.10.1992 JP 282726/92**

(43) Date of publication of application:
**11.05.1994 Bulletin 1994/19**

(73) Proprietor: **NEC CORPORATION**
**Tokyo (JP)**

(72) Inventors:
• **Aoki, Kazuhiko, c/o NEC Corporation**
**Tokyo (JP)**

• **Sakaguchi, Yoshifumi, c/o NEC Corporation**
**Tokyo (JP)**

(74) Representative: **VOSSIUS & PARTNER**
**Siebertstrasse 4**
**81675 München (DE)**

(56) References cited:
**EP-A- 0 086 950**    **EP-A- 0 191 103**
**EP-A- 0 333 867**    **EP-A- 0 339 096**
**EP-A- 0 436 209**    **EP-A- 0 440 805**
**US-A- 4 623 971**

**Description**

The present invention relates to a tracking control circuit for machine tools, robots and the like, and more particularly to a trajectory tracking control circuit capable of tracking the desired trajectory at high precision and high speed.

In controlling curvilinear machining or the trajectory of a multi-axial robot hand in working with a machine tool, a robot or the like, it is imperative to finely control the moving path of the object to be controlled. Herein, a control for keeping track of the moving path of the object relative to the desired trajectory is referred to as trajectory tracking control.

Although it is effective to increase the system gain of the control system for achieving high speed and high precision trajectory tracking control, in practice according to the prior art the constraints of mechanical system make it necessary to reduce the velocity reference to a level where the precision tolerance can be met, and this is obstructing control at any higher velocity.

To resolve this problem, feed-forward control is utilized in the trajectory tracking control system to ensure high speed, which is capable of increasing responsiveness to the desired trajectory while maintaining high speed. However, since the trajectory tracking control faithfully attempts to track steep corners of the desired trajectory without reducing the speed, there is required so high an acceleration as to exceed the performance of the mechanical system, especially that of the motor, inviting shock and vibration. Meanwhile, there is another tracking control system which can avoid the rapid speed changes by supplying the velocity reference for each axis of the object to be controlled to a linear filter. However since low-pass filters are connected to the tracking control system, high frequency components of the velocity reference are lost, eventually inviting errors in the tracked trajectory.

There is still another trajectory tracking control system which detects changes of moving direction in the corners by discriminating the shape of the desired trajectory and reduces the tangential velocity where a high acceleration is needed, for improving the tracking accuracy. However, it is difficult to establish the tracking control because a high arithmetic processing capability is required to perform such complex operations as the discrimination of the shape and detection of the moving direction.

Yet another trajectory tracking control system, which can change velocity references to meet the constraints of a predetermined maximum permissible velocity and a maximum permissible acceleration, is disclosed in the Japanese Patent Disclosure No. 4-33012 of 1992.

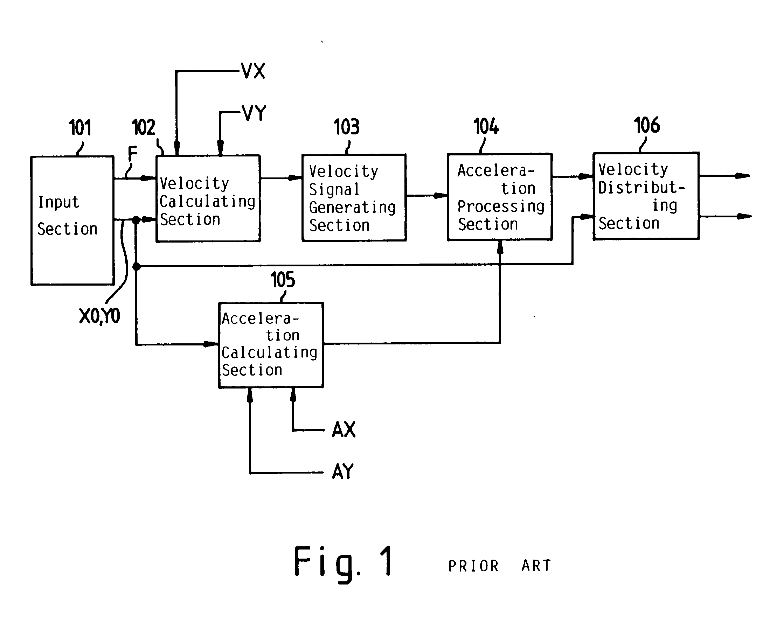

FIG. 1 is a block diagram illustrating the trajectory tracking control circuit disclosed therein. In the figure, a velocity calculating section 102 compares a velocity reference F given by an input section 101 with present maximum permissible velocity values VX, VY of the X and Y axes, and supplies the lower value as a new velocity reference. An acceleration calculating section 105 generates a permissible acceleration signal in response to a preset maximum permissible acceleration value (AX, AY) on each axis and trajectory setting values XO, YO of X, Y axes supplied from the input section 101, and supplies it to an acceleration processing section 104. A velocity signal generating section 103 generates a stepwise velocity signal from the result of calculation by the velocity calculating section 102, and the acceleration processing section 104 smoothly shapes the waveforms of the leading and trailing edges of this stepwise velocity signal in accordance with the output value of the acceleration calculating section 105. A velocity distributing section 106 figures out each axial component of this velocity waveform having undergone the acceleration processing.

This trajectory tracking control circuit can smooth the steep leading and trailing edges of the stepwise velocity reference to meet the constrains of the maximum permissible acceleration, and can realize high precision trajectory tracking. However, it involves the problem of being incapable of tracking control over an arbitrary flexible-curve trajectory on which the velocity signal varies from moment to moment because its acceleration processing section performs acceleration processing only on stepwise velocity signals.

EP-A-0 440 805 discloses a feed speed controller for controlling the speed and the acceleration of each of the axes of a servomotor. When the speed difference ΔVx and the acceleration α are larger than the permissible speed difference ΔVxmax and the permissible acceleration amax, the speed is reduced to one determined by the smaller ratio MX1(K1) and MK2 (K2).

EP-A-0 436 209 and EP-A-O 191 103 disclose motor controllers which use the limit values and compare the limit value with generated data or samples.

An object of the present invention is to provide a trajectory tracking control circuit for causing the object of control to track the desired trajectory whose shape may vary flexibly and may be curvilinear.

Another object of the invention is to provide a trajectory tracking control circuit for causing the object of control to track the desired trajectory without discriminating the shape of the trajectory.

A trajectory tracking control circuit according to the invention is defined in claim 1.

BRIEF DESCRIPTION OF THE DRAWINGS

FIG. 1 is a block diagram illustrating a trajectory tracking control circuit according to the prior art;
FIG. 2 is a block diagram illustrating a trajectory tracking control circuit according to a first preferred embodiment of the present invention;

FIG. 3 is a block diagram illustrating details of the velocity reference generator used in the trajectory tracking control circuit shown in FIG. 2;

FIG. 4 is a flow chart showing the operations of the trajectory tracking control circuit illustrated in FIG. 2;

FIG. 5 is a block diagram illustrating details of the comparator used in the trajectory tracking control circuit shown in FIG. 2;

FIG. 6 is a block diagram illustrating details of the multi-axial coordinator used in the trajectory tracking control circuit shown in FIG. 2;

FIG. 7 is a plan view illustrating the desired trajectory and the trajectory given by the trajectory tracking control circuit shown in FIG. 2;

FIG. 8 is a chart illustrating the variations of velocity references for tracking the desired trajectory shown in FIG. 7 and converted velocity signals over time;

FIG. 9 is a timing chart illustrating in detail the variations of velocity references shown in FIG. 8 over time;

FIG. 10 is a timing chart illustrating in detail the variations of converted velocity signals shown in FIG. 8 over time;

FIG. 11 is a block diagram illustrating a trajectory tracking control circuit according to a third preferred embodiment of the present invention;

FIG. 12 is a block diagram illustrating details of the permissible limit control circuit used in the trajectory tracking control circuit shown in FIG. 11;

FIG. 13 is a plan view showing a square desired trajectory and the trajectory given under heavy load;

FIG. 14 is a chart the variations of the converted velocity signals and the angular velocity of motors over time for tracking the desired trajectory shown in FIG. 13 in the absence of the permissible limit control circuit shown in FIG. 12;

FIG. 15 is a chart the variations of the converted velocity signals and the angular velocity of motors over time for tracking the desired trajectory shown in FIG. 13 in the presence of the permissible limit control circuit shown in FIG. 12; and

FIG. 16 is a block diagram illustrating a trajectory tracking control circuit according to a forth preferred embodiment of the present invention.

## DETAILED DESCRIPTION OF THE PREFERRED EMBODIMENTS

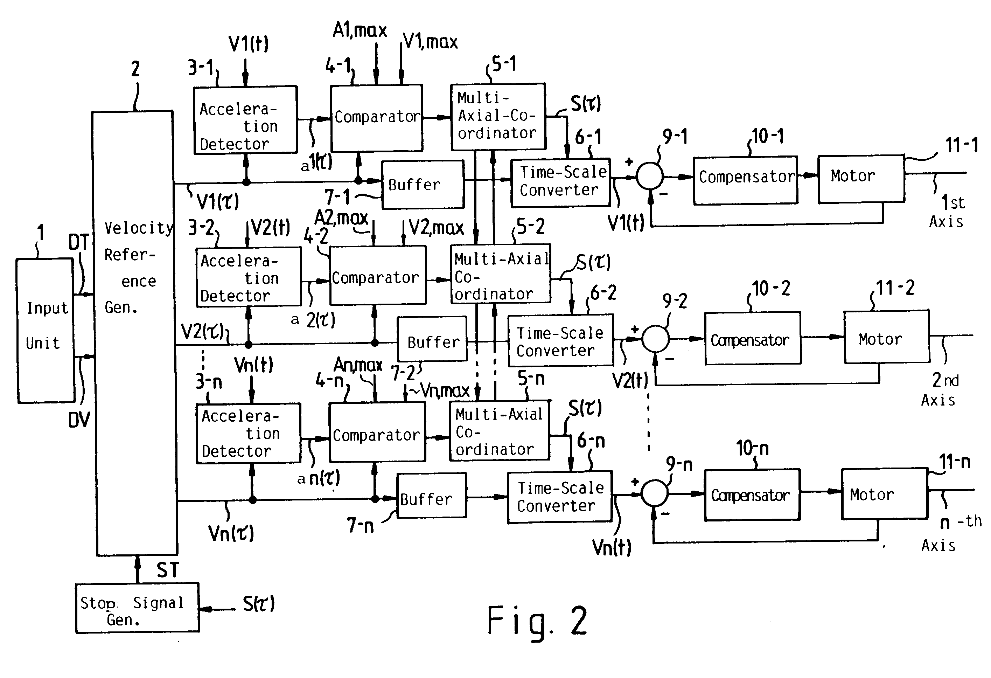

FIG. 2 is a block diagram illustrating a trajectory tracking control circuit according to first preferred embodiment of the present invention.

In the diagram, an input unit 1, which is an host computer or an NC center control apparatus operated by an NC program, generates desired trajectory data DT representing positional coordinates of a desired trajectory and velocity reference data DV representing the velocity at which the desired trajectory is to be tracked. The desired trajectory is divided into components of the 1st through n-th axes, and the object of control to track the desired trajectory is a robot hand which is moved in the directions of these axes by motors 11-1, 11-2, ...., 11-n for the 1st, 2nd, ...., n-th axes, respectively. The desired trajectory data DT are, when the desired trajectory is a circle, radial information on the circle or positional coordinate data sampled from the circular trajectory at prescribed intervals. Where the desired trajectory is linear (straight line), the data DT are positional coordinate data of the starting and end points of the straight line.

A velocity reference generator 2 generates velocity references $Vi(\tau)$ ($i = 1, 2, 3, ..., n$; $\tau$ is a time parameter) for the 1st through n-th axes, respectively, on the basis of the desired trajectory data DT and the velocity reference data DV from the input unit 1. These velocity references are angular velocity signals for the motors to move the robot hand in the directions of different axes, and are sequentially generated in prescribed sampling times $\Delta\tau$. Thus the velocity references $Vi(\tau)$ are angular velocity signals for driving the motor 11-i in the infinitesimal length of time $\Delta\tau$, which may be 0.2 to 1.2 mSec for example.

Acceleration detectors 3-i ($i = 1, 2, 3, ..., n$), comparators 4-i, multi-axial coordinators 5-i, time-scale converters 6-i, buffers 7-i and a stop signal generator 8 are circuits to convert the velocity references $Vi(\tau)$ into converted velocity signals $Vi(t)$ in order to realize high speed and high precision trajectory tracking control. The subscript i of each reference numeral represents any of the 1st through n-th axes to drive the object of control.

Each acceleration detector 3-i generates an acceleration reference from the difference between a given velocity reference $Vi(\tau)$ and a converted velocity signal $Vi(t)$ on the basis of the velocity reference of one sample before the given velocity reference. Each comparator 4-i detects whether or not a given acceleration reference and a given velocity reference exceed respectively preset maximum permissible acceleration value and maximum permissible velocity value, and supplies first and second signals representing the respective ratios of excess values. Each multi-axial coordinator 5-i finds out the greatest value among the first and second signals from the corresponding comparator 4-i, and supplies it as a time-scale variation $S(\tau)$. Each time-scale converter 6-i converts the time $\tau$ into the time scale of the time t by extending the time scale in response to the time-scale variation $S(\tau)$ and, along with that, converts the velocity

EP 0 596 241 B1

reference Vi(τ) for the corresponding axis into the velocity signal Vi(t) at the time t by reducing the velocity to a reciprocal multiple of the time-scale variation S(τ). Each buffer 7-i is a memory buffer for temporarily storing the velocity reference Vi(τ) during the period of processing by the acceleration detector 3-i, comparator 4-i and multi-axial coordinator 5-i. The stop signal generator 8 generates a stop signal ST for holding, until the acceleration detector 3-i is fed with the converted velocity signal Vi(t) on the basis of the velocity reference of one sample before, the generation of the velocity reference Vi(τ) of the next sample, and the time of its generation is determined by the time-scale variation S(τ).

Next will be described the configuration and operation of each part of the trajectory tracking control circuit of FIG. 2.

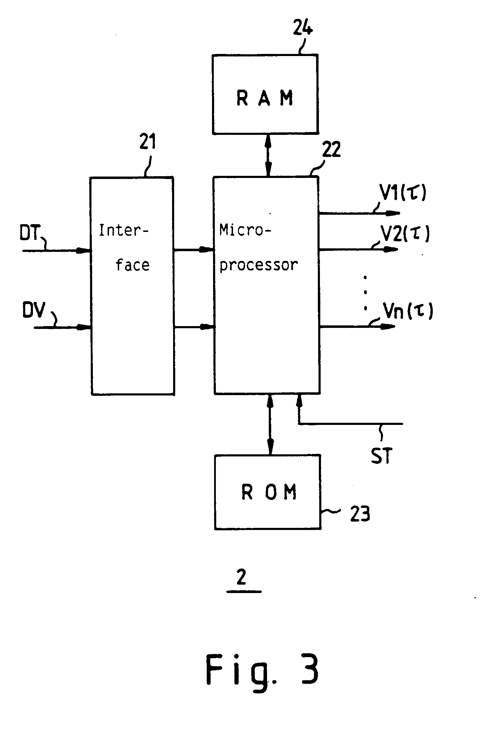

FIG. 3 is a block diagram illustrating details of the velocity reference generator 2. The velocity reference generator 2 has an interface 21 connected to the input unit 1; a microprocessor 22 for processing the velocity reference Vi(τ) for each axis on the basis of the desired trajectory data DT and the velocity reference data DV; a read only memory (ROM) 23 in which the program for the processing by the microprocessor 22 is stored; and a random access memory (RAM) 24 having a working area for use during the processing. Whereas the microprocessor 22 consecutively generates velocity references Vi(τ) as the velocity of the drive time $\Delta\tau$, the outputting of the velocity references is suspended as long as the stop signal ST is supplied from the stop signal generator 8.

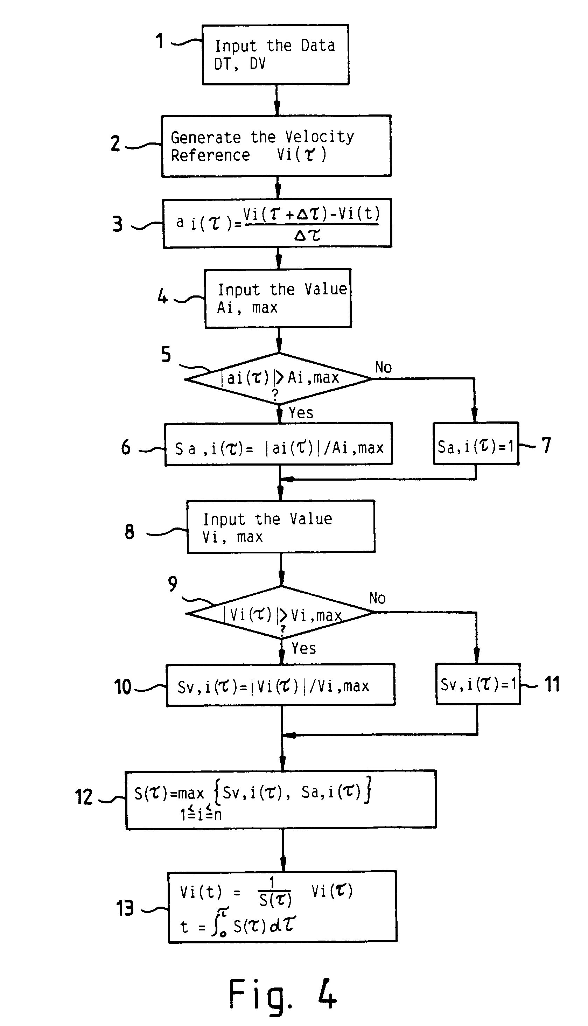

FIG. 4 is a flow chart showing the operations from the generation of a velocity reference Vi(τ) to that of a converted velocity signal Vi(t).

As the velocity reference generator 2 generates velocity references Vi(τ) for the 1st through n-th axes in accordance with the desired trajectory data DT and the velocity reference data DV (steps 1 and 2), each acceleration detector 3-i generates an acceleration reference ai(τ) from the difference between the pertinent velocity reference Vi(τ) and the converted velocity signal Vi(t) on the basis of the velocity reference of one sample before (step 3). Here, since one sample time is equal to the drive time $\Delta\tau$, the acceleration reference ai(τ) is given by the following equation:

$$ai(\tau) = \frac{Vi(\tau + \Delta\tau) - Vi(t)}{\Delta\tau} \tag{1}$$

Therefore, the acceleration reference ai(τ) corresponds to the acceleration required from the velocity at which the motor 11-i was actually moved by the velocity signal Vi(t) of one sample before until the motor is moved by the velocity reference Vi($\tau + \Delta\tau$) of the next sample.

Each comparator 4-i compares the acceleration reference ai(τ) with the preset maximum permissible acceleration value Ai, max (i = 1, 2, 3, ..., n) and compares the velocity reference Vi(τ) (which is actually Vi($\tau + \Delta\tau$) according to Equation (1)) with the preset maximum permissible velocity value Vi, max (i = 1, 2, 3, ..., n) (steps 4, 5 and 8, 9). Further the comparator 4-i, when the acceleration reference ai(τ) detected by the acceleration detector 3-i exceeds the maximum permissible acceleration value Ai,max, supplies an acceleration excess signal Sa,i(τ) to the multi-axial coordinator 5-i (step 6). Here, the acceleration excess signal Sa,i(τ) is determined by the following equation:

$$Sa,i(\tau) = |ai(\tau)| / Ai,max \tag{2}$$

If there is no excess, the signal from the comparator 4-i will be Sa,i(τ) = 1 (step 7). The acceleration excess signal Sa, i(τ) represents the degree by which the acceleration exceeds its maximum permissible value. Similarly, the comparator 4-i, when the velocity reference Vi(τ) exceeds the maximum permissible velocity value Vi,max, also supplies a velocity excess signal Sv,i(τ) to the multi-axial coordinator 5-i (step 10). Here, the velocity excess signal Sv,i(τ) is determined by the following equation:

$$Sv,i(\tau) = |Vi(\tau)| / Vi,max \tag{3}$$

If there is no excess, the signal from the comparator 4-i will be Sv,i(τ) = 1 (step 11). The velocity excess signal Sv,i(τ) represents the degree by which the velocity exceeds its maximum permissible value.

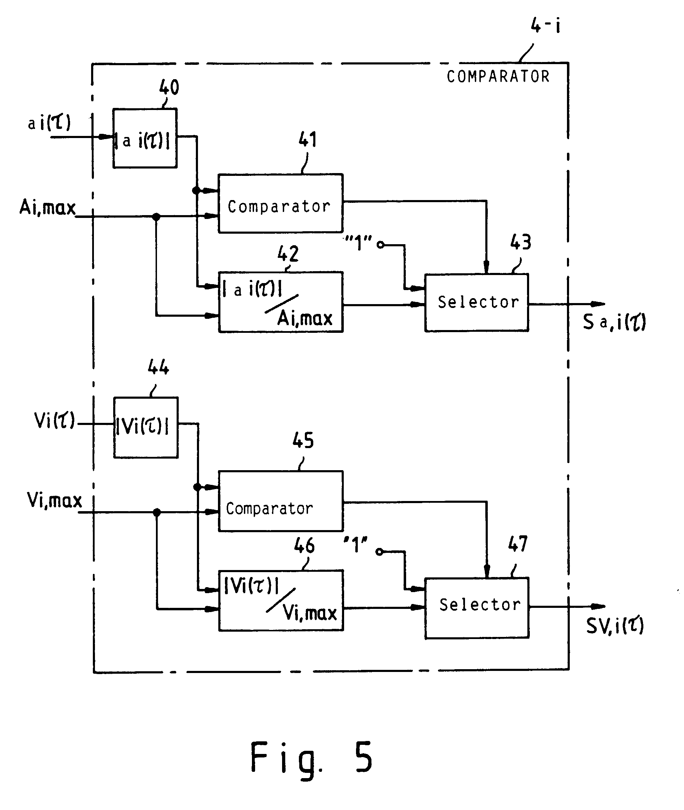

FIG. 5 is a detailed block diagram of the comparator 4-i. In the diagram, the comparator 4-i has circuits 40 through 43 for executing steps 4 through 7 of FIG. 4 and circuits 44 through 47 for executing steps 8 through 11. The circuits 40 through 43 and the circuits 44 through 47 have respectively the same configurations and operate simultaneously. In further detail, the comparator 4-i has absolute value circuits 40 and 44; a comparator 41 for detecting whether or not the acceleration reference |ai(τ)| exceeds the maximum permissible acceleration value Ai,max; another comparator 45 for detecting whether or not the velocity reference |Vi(τ)| exceeds the maximum permissible velocity value Vi,max; an arithmetic operator 42 for computing Equation (2); an arithmetic operator 46 for computing Equation (3); a selector 43 for selecting either datum "1" or the output of the arithmetic operator 42 as an acceleration excess signal Sa,i(τ) in accordance with the output of the comparator 41; and a selector 47 for selecting either datum "1" or the output of the

4

arithmetic operator 46 as an velocity excess signal $Sv,i(\tau)$ in accordance with the output of the comparator 45.

Referring back to FIG. 2, the multi-axial coordinator 5-i, receiving the acceleration excess signal $Sa,i(\tau)$ and the velocity excess signal $Sv,i(\tau)$, searches for any axis on which the limit is exceeded; if there is any, i.e. if $Sv,i(\tau)$ is greater than 1 or $Sa,i(\tau)$ is greater than 1, determines the time-scale variation (the variation rate of the actual time t relative to the time parameter $\tau$) so that every drive axis meets the limits of the maximum permissible acceleration and the maximum permissible velocity; and conveys the value to the time-scale converter 6-i of each axis. At this time, the time-scale variation $S(\tau)$ is determined by the following equation (step 12).

$$S(\tau) = \max_{1 \leq i \leq n} \{ Sa,i(\tau), Sv,i(\tau) \} \quad \ldots \quad (4)$$

Thus $S(\tau)$ is the greatest of the acceleration excess signals and the velocity excess signals for the 1st through n-th axes. The multi-axial coordinators 5-1 through 5-n simultaneously supply the time-scale variations $S(\tau)$ calculated by Equation (4) to each time-scale converter 6-i. The multi-axial coordinators 5-i thereby control the time-scale converters 6-i to coordinate the motions of the axes by extending the time scale for every axis according to the time-scale variation $S(\tau)$. If every axis satisfies the limits Ai,max and Vi,max, $S(\tau)$ will be equal to 1, and accordingly no time extension will take place.

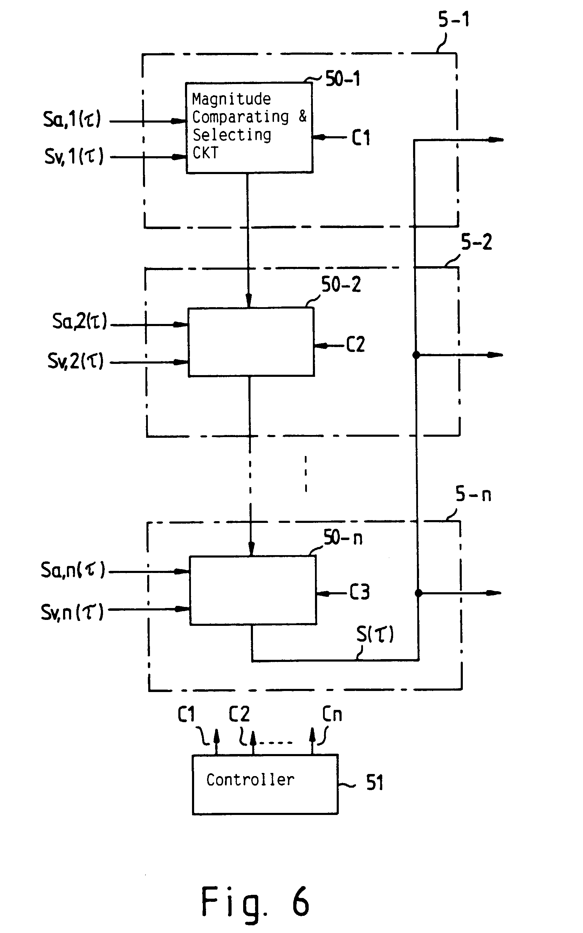

FIG. 6 is a block diagram of the multi-axial coordinators 5-1 through 5-n. Each of the multi-axial coordinators has a magnitude comparing and selecting circuit 50-i, which is controlled by a controller 51, for comparing the magnitudes of input signals and selecting the greatest input signal as the output signal. First, the magnitude comparing and selecting circuit 50-1, in response to a control signal C1, compares the acceleration excess signal $Sa,1(\tau)$ and the velocity excess signal $Sv,1(\tau)$, and selects the greater signal. Next the magnitude comparing and selecting circuit 50-2, in response to a control signal C2, selects the greatest among the output signal of the circuit 50-1, the acceleration excess signal $Sa,2(\tau)$ and the velocity excess signal $Sv,2(\tau)$. The successive performance of this operation by the remaining multi-axial coordinators 5-3 to 5-n gives a time-directional variation $S(\tau)$ satisfying Equation (4).

The time-scale converter 6-i generates a converted velocity signal Vi(t) for the corresponding axis so as to keep the moving distance constant by extending the time $\tau$ by the time-scale variation $S(\tau) \times \tau$ and at the same time reducing the velocity correspondingly to the extension (step 13). Here, the converted velocity signal Vi(t) for each axis is determined by the following equation.

$$Vi(t) = \frac{1}{S(\tau)} Vi(\tau) \tag{5}$$

Therefore the time-scale converter 6-i can drive each axis to satisfy the permissible maximum acceleration and velocity limits by reducing the velocity reference of each axis according to the maximum value of the ratio of the acceleration or velocity to its permissible limit. The relationship between the actual time t after the conversion and the time parameter $\tau$ before the conversion is determined by the following equation.

$$t = \int_0^\tau S(\tau) \, d\tau \tag{6}$$

When all the axes satisfy the limits ($S(\tau) = 1$), the velocity references $Vi(\tau)$ are supplied as they are as the velocity signals Vi(t), but if any one of the axes exceeds its limit, the drive time will be extended correspondingly, and the velocity reference reduced. The velocity references are thereby converted into smooth velocity signals Vi(t) which can be tracked by the drive system.

These operations from steps 2 through 13 are repeatedly executed every time a sample value of the velocity reference $Vi(\tau)$ is generated.

The velocity signal Vi(t) from each time-scale converter 6-i is supplied to the corresponding one of adders 9-i to calculate the difference from the velocity signal representing the rotational angle velocity of the corresponding motor 11-i. Each of compensators 10-i consists of a PID control circuit which controls the operation of the motor 11-i so as to minimize that difference. The motor 11-i stably rotates under the PID control.

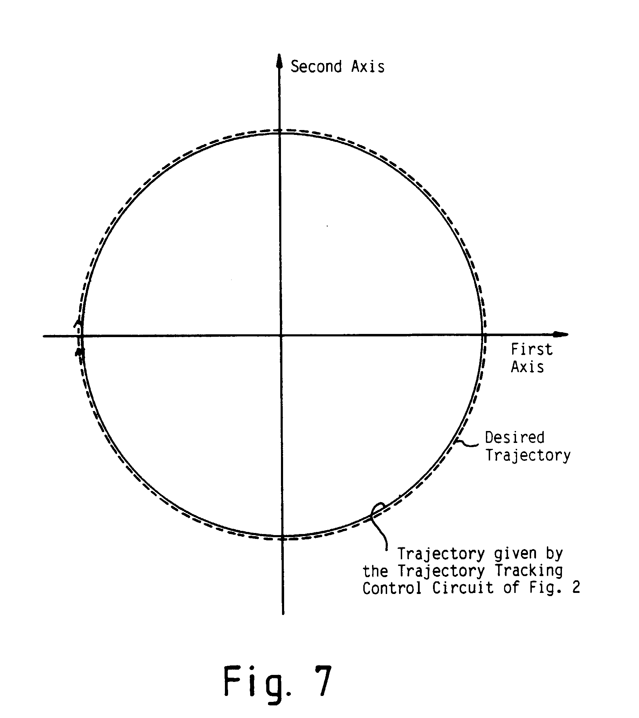

Next will be described with reference to FIG. 7 the operations of the trajectory tracking control circuit of FIG. 2 when it moves a robot hand along a circular trajectory on a plane involving the 1st and 2nd axes.

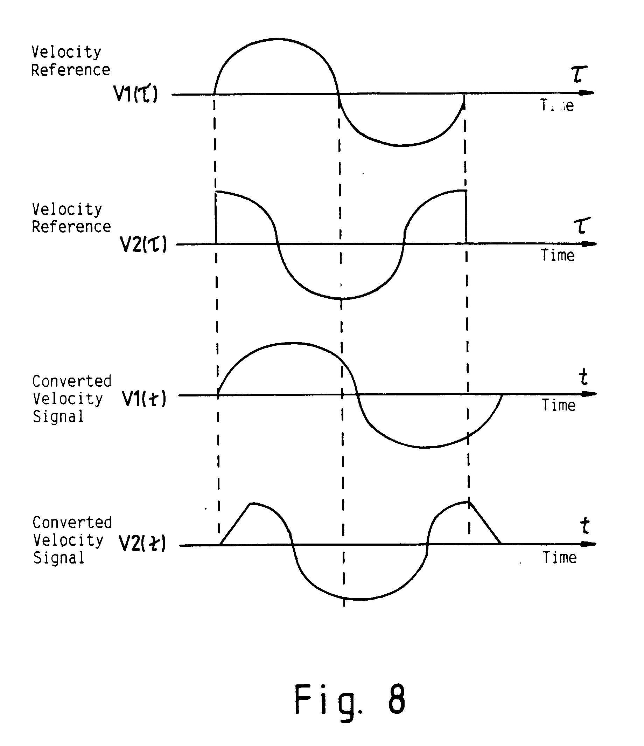

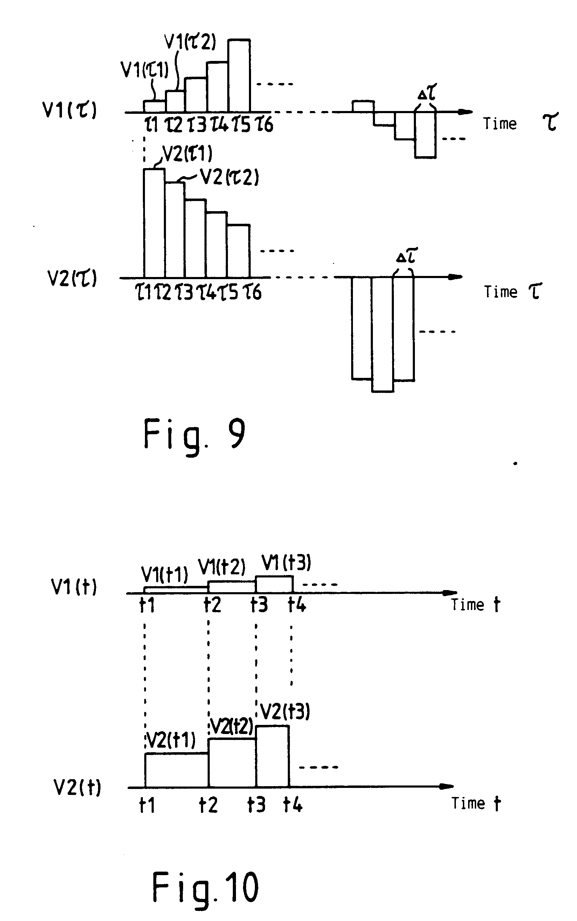

The input unit 1 generates the desired trajectory data DT indicating the radius of the circular trajectory and the axes to be driven and the velocity reference data DV representing the tracking velocity on the circular trajectory. The velocity reference generator 2, on the basis of the desired trajectory data DT and the velocity reference data DV, calculates and supplies the velocity references V1($\tau$) and V2($\tau$) for the 1st and 2nd axes, respectively. FIG. 8 is a chart illustrating the variations of the velocity references V1($\tau$) and V2($\tau$) and the respectively corresponding converted velocity signals V1(t) and V2(t) over time. It is to be noted, however, that the velocity references V1($\tau$) and V2($\tau$) in FIG. 8 include no stop time due to the stop signal ST. Whereas the velocity references V1($\tau$) and V2($\tau$) are represented by waveforms which vary in an analog way, actual velocity references V1($\tau$) and V2($\tau$) are equal to the sample values shown in FIG. 9, which result from the sampling of the corresponding waveforms of FIG. 8 with the drive time $\Delta\tau$. The sampled values of the time at the time points $\tau1$, $\tau2$, $\tau3$, ... on the corresponding axes in FIG. 9, i.e. velocity references from the velocity reference generator 2, are respectively V1($\tau1$), V1($\tau2$), V1($\tau3$), ... for the 1st axis, and V2($\tau1$), V2($\tau2$), V2($\tau3$), ... for the 2nd axis. Here $\Delta\tau = \tau2 - \tau1 = \tau3 - \tau2 = \cdots$.

The acceleration detectors 3-1 and 3-2 generate acceleration references according to the respective differences of the velocity references V1($\tau$) and V2($\tau$) from the converted velocity signals V1(t) and V2(t) corresponding to the velocity references of one sample before, however, both V1(t) and V2(t) are 0 in the aforementioned Equation (1) because no converted velocity signals are generated at the first time $\tau1$. Therefore the acceleration references a1($\tau1$) and a2($\tau1$) for the velocity references V1($\tau1$) and V2($\tau1$) are respectively represented by the following equations.

$$a1(\tau1) = V1(\tau1)/\Delta\tau$$

$$a2(\tau1) = V2(\tau1)/\Delta\tau$$

Then the comparators 4-1 and 4-2 respectively detect whether the acceleration references a1($\tau1$) and a2($\tau1$) exceed the maximum permissible acceleration values A1,max and A2,max and whether the velocity references V1($\tau1$) and V2($\tau1$) exceed the maximum permissible velocity values V1,max and V2,max, and generate acceleration excess signals Sa,1($\tau1$) and Sa,2($\tau1$) and velocity excess signals Sv,1($\tau1$) and Sv,2($\tau1$) from Equations (2) and (3), respectively. The multi-axial coordinators 5-1 and 5-2 detect the signal having the greatest value out of the acceleration excess signals and the velocity excess signals according to Equation (4), and supplies it as the time-scale variation S($\tau1$). When, as shown in FIG. 9, the acceleration after the start of trajectory tracking until the velocity reference V2($\tau1$) is reached is extremely great and its acceleration excess signal Sa,2($\tau1$) is the greatest, the time-scale variation S($\tau1$) equals to Sa,2($\tau1$). As illustrated in FIG. 10, the time-scale converters 6-1 and 6-2, in accordance with Equations (5) and (6), convert the drive times $\Delta\tau$ of the 1st and 2nd axes into S($\tau1$)·$\Delta\tau$, and the velocity references V1($\tau1$) and V2($\tau1$) into velocity signals V1(t1) = V1($\tau1$)/S($\tau1$) and V2(t1) = V2($\tau1$)/S($\tau1$), respectively. These conversions involve only the drive times and velocities of the 1st and 2nd axes, but result in no change in moving distance.

The conversion of the velocity references V1($\tau1$) and V2($\tau1$) into velocity signals V1(t1) and V2(t1) are now completed. Next, the velocity reference generator 2 generates the next velocity references V1($\tau2$) and V2($\tau2$) while the time-scale converters 6-1 and 6-2 are generating converted velocity signals V1(t1) and V2(t1), and the acceleration detectors 3-1 and 3-2 detect acceleration references a1($\tau2$) and a2($\tau2$) by the following equations.

$$a1(\tau2) = \frac{V1(\tau2) - V1(t1)}{\Delta\tau}$$

$$a2(\tau2) = \frac{V2(\tau2) - V2(t1)}{\Delta\tau}$$

Thereafter, the same operations are repeated, from those by the comparators 4-1 and 4-2 to those by the time-scale converters 6-1 and 6-2.

As described above, the velocity references of the 1st and 2nd axes track the circular trajectory at high speed and high precision within the acceleration and velocity limits. Thus, as illustrated in FIG. 7, the circular trajectory by this preferred embodiment (solid line) proves substantially identical with the trajectory reference (broken line).

In the above-described embodiment of the present invention, if either the velocity reference Vi($\tau$) or the acceleration reference ai($\tau$) of at least one axis exceeds the velocity limit or the acceleration limit and then the velocity excess signal Sv,i($\tau$) or the acceleration excess signal Sa,i($\tau$) becomes greater than 1, the velocity reference of every axis is reduced and the drive time of every axis is extended, but even if, conversely, both the velocity reference Vi($\tau$) and the acceleration reference ai($\tau$) of every axis are less than the acceleration and velocity limits, respectively, and there is surplus drive power, no control to raise the velocity to its upper limit is accomplished. Thus in the latter case, as the comparator 4-i, shown in FIG. 5, generates Sa,i($\tau$) and Sv,i($\tau$) of 1 and then the time-scale variation S($\tau$) becomes 1, the time-scale converter 6-i supplies the velocity reference as it is as the velocity signal Vi(t).

In a second preferred embodiment of the present invention, only arithmetic operations for processing the aforementioned Equations (2) and (3), i.e. the arithmetic operators 42 and 46 of FIG. 5, are used instead of the comparators 4-i. This makes it possible to generate the acceleration excess signals $Sa,i(\tau)$ and the velocity excess signals $Sv,i(\tau)$ which are smaller than 1, and therefore the time-scale variation $S(\tau)$ becomes a value smaller than 1, when both the velocity reference and the acceleration velocity of every axis is less than the respective upper limits of acceleration and velocity. In this case, the time-scale converters 6-i can raise the velocity to the limits of acceleration and velocity, and serve to further improve the high speed performance.

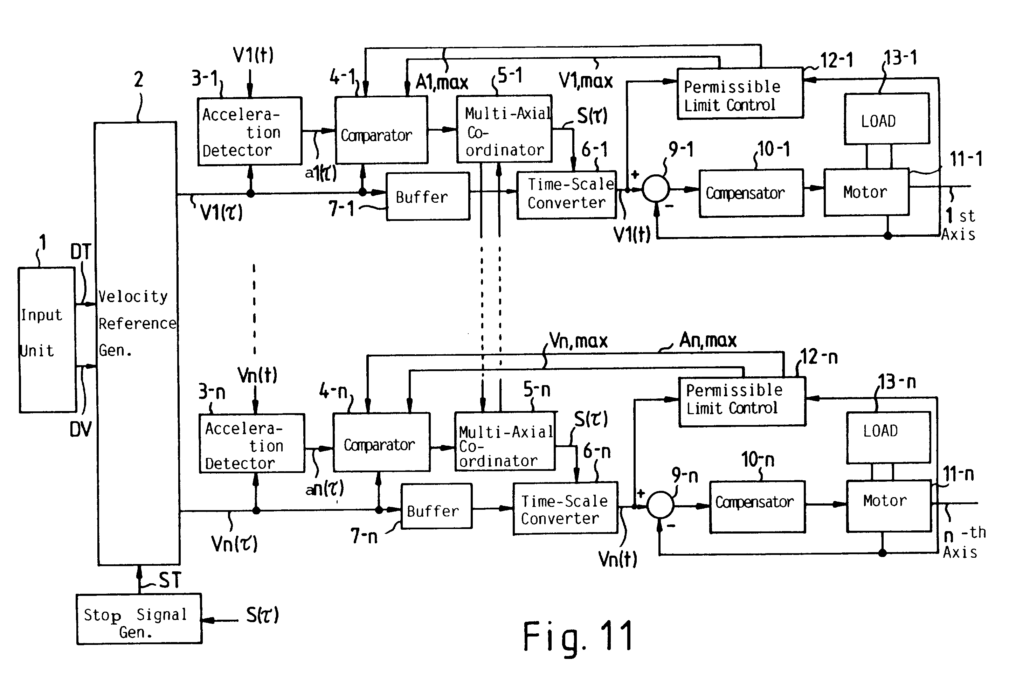

FIG. 11 is a block diagram illustrating a trajectory tracking control circuit according to a third preferred embodiment of the invention.

In the diagram, this embodiment differs from the trajectory tracking control circuit of FIG. 2 in that it is provided with permissible limit control circuits 12-i (i = 1, 2, 3, ..., n), and the maximum permissible acceleration Ai,max and the maximum permissible velocity Vi,max are made variable.

Generally, when the load 13-i connected to the motor 11-i suddenly increases, it becomes difficult for the motor 11-i to accurately track the desired trajectory within the preset upper limits of acceleration and velocity. In such a case, it is necessary to further reduce either the acceleration or the velocity to improve the tracking accuracy. The permissible limit control circuit 12-i improves the tracking accuracy by detecting any change in the angular velocity of the motor 11-i due to a change of load 13-i and reducing the maximum permissible acceleration value Ai,max and the maximum permissible velocity value Vi,max according to the quantity of the detected variation. For detecting any change in the angular velocity of the motor 11-i due to a change in load 13-i, the load change is directly detected with a sensor or the like, but this embodiment uses a different detecting method by which the angular velocity change is detected by indirectly detecting the load change from the converted velocity signal Vi(t) and the rotational angular velocity detection signal of the motor 11-i.

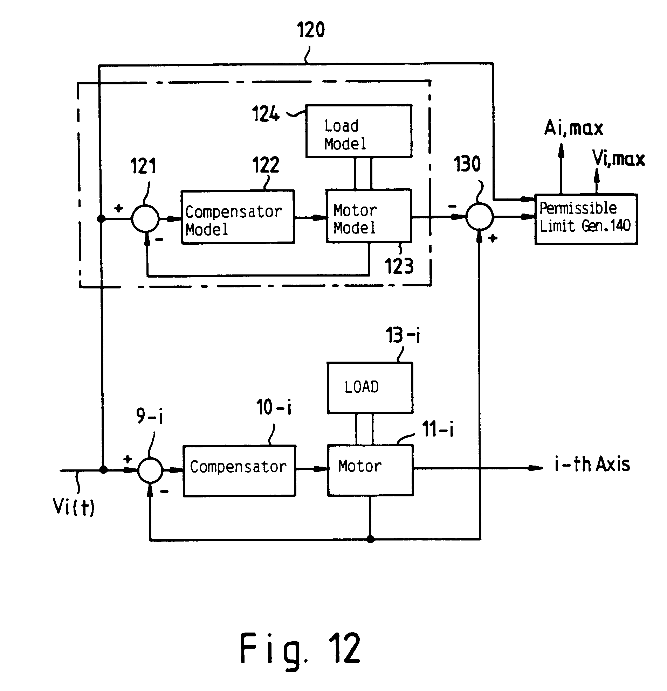

FIG. 12 is a block diagram of the permissible limit control circuit 12-i.

Each permissible limit control circuit 12-i comprises a virtual arithmetic operator 120 having a virtual model 121 of the subtracter 9-i, a virtual model 122 of the compensator 10-i, a virtual model 123 of the motor 11-i, and a virtual model 124 of the load 13-i. The virtual arithmetic operator 120 processes the rotational angular velocity of the motor, when the converted velocity Vi(t) is inputted, with a microprocessor using each virtual model configured in software. A subtracter 130 calculates the difference between the angular velocity signal of the motor 11-i and the angular velocity signal from the virtual arithmetic operator 120. A permissible limit generator 140 generates the maximum permissible acceleration value Ai,max and the maximum permissible velocity value Vi,max on the basis of the converted velocity signals Vi(t) and the output of the subtracter 130.

The virtual arithmetic operator 120 supposes a normal load in supplying the angular velocity signal. Consequently, if the load 13-i suddenly increases, the difference signal from the subtracter 130 will increase in magnitude. The permissible limit generator 140 will then reduce the permissible limits by generating the optimal maximum permissible acceleration value Ai,max and maximum permissible velocity value Vi,max on the basis of the difference signal from the subtracter 130.

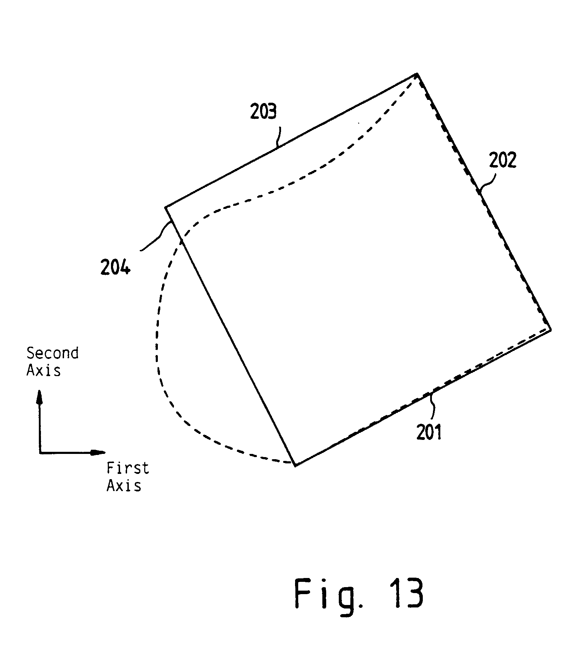

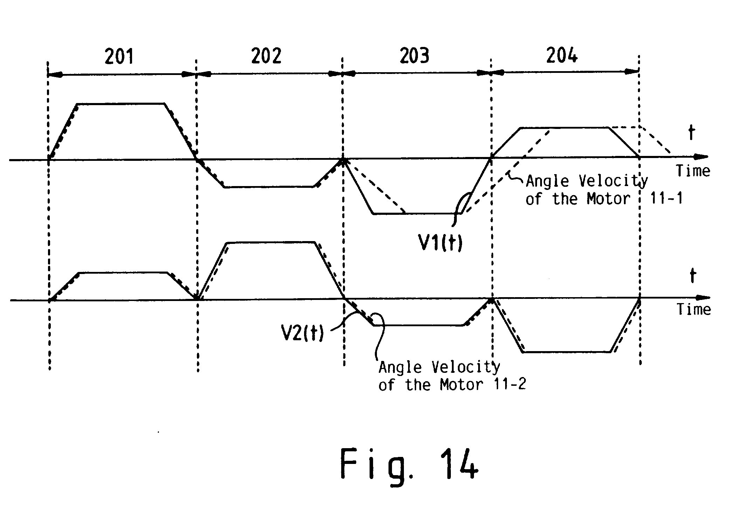

Now it is supposed that, as illustrated in FIG. 13, a square on the 1st and 2nd axes is given as the desired trajectory. In the absence of the permissible limit control circuits 12-i, the converted velocity signals V1(t) and V2(t) and the angular velocities of the motors 11-1 and 11-2 will vary as shown in FIG. 14, wherein sections 201 and 202 represent the absence of large variations in the loads 13-1 and 13-2; sections 203 and 204, an increase in the load 13-1; solid lines in FIG. 14, variations of the converted velocity signals V1(t) and V2(t) over time; and broken lines, variations of the angular velocities of the motors 11-1 and 11-2. As illustrated, while the motors 11-1 and 11-2 at the leading and trailing edges of sections 201 and 202 are driven within the maximum permissible acceleration and maximum permissible velocity values and can well track the converted velocity signals V1(t) and V2(t), in sections 203 and 204 the motor 11-1 becomes unable to track them on account of overloading, and the trajectory is disturbed as indicated by the broken line in FIG. 13.

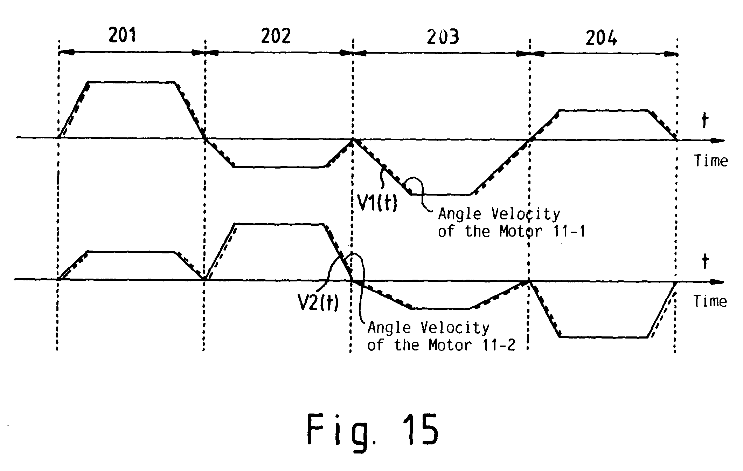

However, by adding the permissible limit control circuits 12-i, it is made possible to reduce either the maximum permissible acceleration or velocity value in sections 203 and 204, and the motors 11-1 and 11-2 are thereby enabled to track the converted velocity signals V1(t) and V2(t) as shown in FIG. 15, resulting in the elimination of trajectory disturbance.

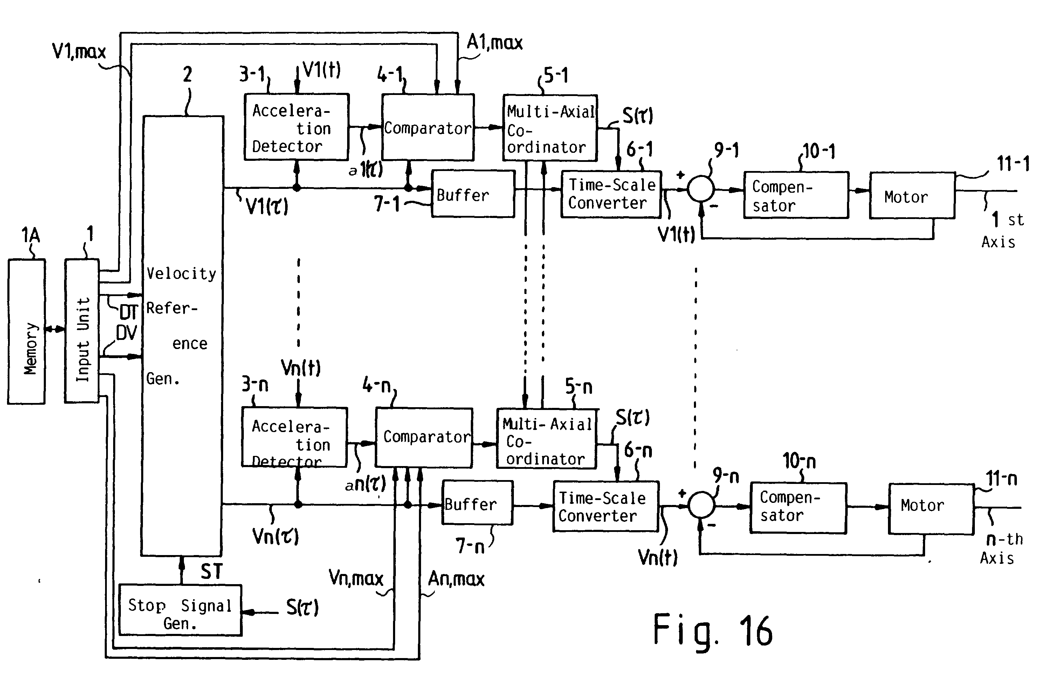

FIG. 16 is a block diagram illustrating a trajectory tracking control circuit which is a fourth preferred embodiment of the present invention.

In the diagram, the maximum permissible acceleration value Ai,max and the maximum permissible velocity value Vi,max are supplied to the comparators 4-i from the input unit 1, and the generator 2 and the subsequent circuits are the same as the respectively corresponding ones in the trajectory tracking control circuit shown in FIG. 2. To the input unit 1 is connected a memory 1A in which NC programs are stored. The NC programs consist of a program which gives instructions regarding the desired trajectory and the velocity, and another program which gives instructions regarding the maximum permissible acceleration value and the maximum permissible velocity value.

The input unit 1 reads into it the NC programs from the memory 1A, generates and supplies to the velocity reference generator 2 the desired trajectory data DT and the velocity reference data DV instructed by one of the programs, and generates and supplies to the comparators 4-i the maximum permissible acceleration value Ai,max and the maximum permissible velocity value Vi,max for each axis. Since the permissible limits of velocity and acceleration are written into the memory 1A as programs in this embodiment, the limits can be altered on a real time basis without stopping the motors when variations in the object of control or load are known in advance, so that the machine can be utilized to the best of its performance and the desirable degree of tracking precision can be secured all the time.

## Claims

1. A trajectory tracking control circuit having the moving path of the object of control track a desired trajectory, comprising:

   a plurality of motors (11-i, i=1,2,3,...,n) connected to a plurality of axes to drive said object of control;
   velocity reference generating means (1,1A,2) for generating for each of the axes a velocity reference, which serves as the reference for the driving speed of each of said plurality of motors driving said plurality of axes, in accordance with said desired trajectory;
   acceleration detecting means (3-i), one provided for each axis, for detecting acceleration references on the basis of said velocity references supplied from said velocity reference generating means;
   means (4-i) for generating a first signal representing a ratio of each of the acceleration references detected by the acceleration detecting means to a permissible acceleration limit and a second signal representing a ratio of each of the velocity references to a permissible velocity limit;
   multi-axial coordinating means (5-i) for comparing the magnitudes of said first and second signals, and generating a common time-scale variation for every motor so that all the said plurality of motors can satisfy said permissible acceleration limit and said permissible velocity limit; said trajectory control circuit characterized in that;
   said velocity reference generating means (1,1A,2) has,
   a memory (1A) for storing a program which gives instructions regarding the desired trajectory and instructions regarding said permissible velocity limit and said permissible acceleration limit,
   means (1) for reading said instructions from said program to generate said permissible velocity limit and said permissible acceleration limit as well as desired trajectory data (DT) and velocity reference data (DV) and for supplying said permissible velocity limit and said permissible acceleration limit to said means (4-i), and
   a velocity reference generator (2) for generating said velocity references for each of said axes on the basis of said desired trajectory data (DT) and velocity reference data (DV).

2. A trajectory tracking control circuit, as claimed in Claim 1, further comprising :

   time-scale converting means (6-i) for varying said velocity references according to said time-scale variation to generate velocity signals accordingly and, at the same time, to vary time-scales while said velocity signals generate, so that said object can move in the same distance at the time when the object moves at said velocity reference.

3. A trajectory tracking control circuit, as claimed in Claim 1 or 2, wherein said velocity reference generating means (1, 1A, 2) sequentially generates said velocity references as sampled values.

4. A trajectory tracking control circuit, as claimed in any of Claims 1 to 3, wherein each of said acceleration detecting means (3-i) generates said acceleration reference according to the difference between said velocity reference and a velocity signal from said time-scale converting means corresponding to the velocity reference of one sample before.

5. A trajectory tracking control circuit, as claimed in any of Claims 1 to 4, wherein each of said means (4-i) for generating the first and second signals generates, if said acceleration reference exceeds said permissible acceleration limit, an acceleration excess signal ($Sa,i(\tau)$) indicating the degree of access, or in the absence of such excess a "1" signal as said first signal; and generates, if said velocity reference exceeds said permissible velocity limit, a velocity excess signal ($Sv,i(\tau)$) indicating the degree of access, or in the absence of such excess a "1" signal as said second signal.

6. A trajectory tracking control circuit, as claimed in any of claims 1 to 5, wherein said multi-axial coordinating means (5-i) detect the signal having the greatest value among said first and second signals, and supply said signal having the greatest value as said time-scale variation.

7. A trajectory tracking control circuit, as claimed in any of Claims 1 to 6, further having permissible limit control circuits (12-i) for varying at least either of said permissible acceleration limit and said permissible velocity limit according to variations in the load (13-i) of said object of control.

**Patentansprüche**

1. Bahnverfolgungssteuerungsschaltung zum Abgleichen des Bewegungsweges eines zu steuernden Objekts bezüglich einer Sollbahn, mit:

mehreren Motoren (11-i; i=1, 2, 3, ..., n), die mit mehreren Achsen verbunden sind, um das zu steuernde Objekt anzutreiben;
einer Referenzgeschwindigkeitserzeugungseinrichtung (1, 1A, 2) zum Erzeugen einer Referenzgeschwindigkeit für jede der Achsen, das als Referenz für die Antriebsgeschwindigkeit jeder der mehreren Motoren, die die mehreren Achsen antreiben, bezüglich der Sollbahn dient;
Beschleunigungserfassungseinrichtungen (3-i) zum Erfassen von Referenzbeschleunigungen auf der Basis der von der Referenzgeschwindigkeitserzeugungseinrichtung zugeführten Referenzgeschwindigkeiten, wobei für jede Achse eine Beschleunigungserfassungseinrichtung vorgesehen ist;
Einrichtungen (4-i) zum Erzeugen eines ersten Signals, das ein Verhältnis jedes der durch die Beschleunigungserfassungseinrichtungen erfaßten Referenzbeschleunigen zu einem Beschleunigungsgrenzwert darstellt, und eines zweiten Signals, das ein Verhältnis jeder der Referenzgeschwindigkeiten zu einem Geschwindigkeitsgrenzwert darstellt;
Mehrachsenkoordinierungseinrichtungen (5-i) zum Vergleichen der Größen des ersten und des zweiten Signals, und zum Erzeugen einer gemeinsamen Zeitmaßstabänderung für jeden Motor, so daß jeder der mehreren Motoren den Beschleunigungsgrenzwert und den Geschwindigkeitsgrenzwert einhalten kann;
die Bahnverfolgungssteuerungsschaltung ist **dadurch gekennzeichnet, daß**
die Referenzgeschwindigkeitserzeugungseinrichtung (1, 1A, 2) aufweist: einen Speicher (1A) zum Speichern eines Programms, das Befehle bezüglich der Sollbahn und Befehle bezüglich des Geschwindigkeitsgrenzwertes und des Beschleunigungsgrenzwertes ausgibt;
eine Einrichtung (1) zum Lesen der Befehle vom Programm, um den Geschwindigkeitsgrenzwert und den Beschleunigungsgrenzwert sowie Sollbahndaten (DT) und Referenzgeschwindigkeitsdaten (DV) zu erzeugen, und zum Zuführen des Geschwindigkeitsgrenzwertes und des Beschleunigungsgrenzwertes zu den Einrichtungen (4-i); und
einen Referenzgeschwindigkeitsgenerator (2) zum Erzeugen der Referenzgeschwindigkeiten für jede der Achsen auf der Basis der Sollbahndaten (DT) und der Referenzgeschwindigkeitsdaten (DV).

2. Bahnverfolgungssteuerungsschaltung nach Anspruch 1, ferner mit:

Zeitmaßstabumwandlungseinrichtungen (6-i) zum Ändern der Referenzgeschwindigkeiten gemäß einer Zeitmaßstabänderung, um entsprechende Geschwindigkeitssignale zu erzeugen, und zum gleichzeitigen Ändern von Zeitmaßstäben, während die Geschwindigkeitssignale erzeugt werden, so daß sich das Objekt in der Zeit über die gleiche Strecke bewegen kann, wenn das Objekt sich mit der Referenzgeschwindigkeit bewegt.

3. Bahnverfolgungssteuerungsschaltung nach Anspruch 1 oder 2, wobei der Referenzgeschwindigkeitserzeugungseinrichtung (1, 1A, 2) die Referenzgeschwindigkeiten sequentiell als Abtastwerte erzeugt.

4. Bahnverfolgungssteuerungsschaltung nach einem der Ansprüche 1 bis 3, wobei jede der Beschleunigungserfassungseinrichtungen (3-i) die Referenzbeschleunigung gemäß der Differenz zwischen der Referenzgeschwindigkeit und einem der Referenzgeschwindigkeit eines vorangehenden Abtastvorgangs entsprechenden Geschwindigkeitssignal von der Zeitmaßstabumwandlungseinrichtung erzeugt.

5. Bahnverfolgungssteuerungsschaltung nach einem der Ansprüche 1 bis 4, wobei jede der Einrichtungen (4-i) zum Erzeugen des ersten und des zweiten Signals, wenn die Referenzbeschleunigung den Beschleunigungsgrenzwert überschreitet, ein das Maß der Überschreitung anzeigendes Beschleunigungsüberschreitungssignal ($Sa,i(\tau)$), oder, wenn eine solche Überschreitung nicht vorliegt, ein Signal mit dem Wert "1" als das erste Signal erzeugt;

und, wenn die Referenzgeschwindigkeit den Geschwindigkeitsgrenzwert überschreitet, ein das Maß der Überschreitung anzeigendes Geschwindigkeitsüberschreitungssignal (Sv,i(τ)), oder, wenn eine solche Überschreitung nicht vorliegt, ein Signal mit dem Wert "1" als das zweite Signal erzeugt.

6. Bahnverfolgungssteuerungsschaltung nach einem der Ansprüche 1 bis 5, wobei die Mehrachsenkoordinierungseinrichtungen (5-i) das Signal mit dem größten Wert unter den ersten und zweiten Signalen erfassen und das Signal mit dem größten Wert als Zeitmaßstabänderung ausgeben.

7. Bahnverfolgungssteuerungsschaltung nach einem der Ansprüche 1 bis 6, ferner mit Schaltungen (12-i) zum Steuern von Grenzwerten zum Ändern des Beschleunigungsgrenzwertes und/oder des Geschwindigkeitsgrenzwertes gemäß Änderungen der Last (13-i) des zu steuernden Objekts.

## Revendications

1. Circuit de commande de suivi de trajectoire dont le chemin de déplacement de l'objet de la commande suit une trajectoire souhaitée, comprenant :

   - une pluralité de moteurs (11-i, i=1,2,3,...,n) connectée à une pluralité d'axes pour entraîner ledit objet de la commande;
   - des moyens de génération de référence de vitesse (1, 1A, 2) pour générer pour chacun des axes une référence de vitesse, qui sert en tant que référence pour la vitesse d'entraînement de chacun de ladite pluralité de moteurs entraînant ladite pluralité d'axes, conformément à ladite trajectoire souhaitée;
   - des moyens de détection d'accélération (3-i), un fourni pour chaque axe, pour détecter des références d'accélération sur la base desdites références de vitesse fournies depuis lesdits moyens de génération de référence de vitesse;
   - des moyens (4-i) pour générer un premier signal représentant un rapport de chacune des références d'accélération détectées par les moyens de détection d'accélération à une limite d'accélération admissible et un deuxième signal représentant un rapport de chacune des références de vitesse à une limite de vitesse admissible;
   - des moyens de coordination multiaxiale (5-i) pour comparer les amplitudes desdits premier et deuxième signaux, et pour générer une variation d'échelle de temps commune pour chaque moteur de sorte que tous les moteurs de ladite pluralité de moteurs puissent satisfaire à ladite limite d'accélération admissible et à ladite limite de vitesse admissible;

      ledit circuit de commande de trajectoire étant caractérisé en ce que :

   - lesdits moyens de génération de référence de vitesse (1, 1A, 2) ont

      • une mémoire (1A) pour stocker un programme qui donne des instructions concernant la trajectoire désirée et des instructions concernant ladite limite de vitesse admissible et ladite limite d'accélération admissible,
      • des moyens (1) pour lire lesdites instructions à partir dudit programme pour générer ladite limite de vitesse admissible et ladite limite d'accélération admissible aussi bien que les données de trajectoire désirée (DT) et les données de référence de vitesse (DV) et pour fournir ladite limite de vitesse admissible et ladite limite d'accélération admissible auxdits moyens (4-i), et
      • un générateur de référence de vitesse (2) pour générer lesdites références de vitesse pour chacun desdits axes sur la base des données de trajectoire désirée (DT) et des données de référence de vitesse (DV).

2. Circuit de commande de suivi de trajectoire selon la revendication 1, comprenant en outre :

   - des moyens de conversion d'échelle de temps (6-i) pour faire varier lesdites références de vitesse selon ladite variation d'échelle de temps pour générer des signaux de vitesse en conséquence et, en même temps, pour faire varier des échelles de temps pendant que lesdits signaux de vitesse sont générés, de sorte que ledit objet peut se déplacer de la même distance à l'instant où l'objet se déplace à ladite référence de vitesse.

3. Circuit de commande de suivi de trajectoire selon la revendication 1 ou 2, dans lequel lesdits moyens de génération de référence de vitesse (1, 1A, 2) génèrent séquentiellement lesdites références de vitesse en tant que valeurs échantillonnées.

4. Circuit de commande de suivi de trajectoire selon l'une quelconque des revendications 1 à 3, dans lequel chacun desdits moyens de détection d'accélération (3-i) génère ladite référence d'accélération selon la différence entre ladite référence de vitesse et un signal de vitesse provenant desdits moyens de conversion d'échelle de temps correspondant à la référence de vitesse d'un échantillon précédent.

5. Circuit de commande de suivi de trajectoire selon l'une quelconque des revendications 1 à 4, dans lequel chacun desdits moyens (4-i) pour générer les premier et deuxième signaux génère, si ladite référence d'accélération excède ladite limite d'accélération admissible, un signal d'excès d'accélération ($Sa,i(\tau)$) indiquant le degré d'accès, ou en l'absence d'un tel excès un signal "1" en tant que dit premier signal; et génère, si ladite référence de vitesse excède ladite limite de vitesse admissible, un signal d'excès de vitesse ($Sv,i(\tau)$) indiquant le degré d'accès, ou en l'absence d'un tel excès un signal "1" en tant que dit deuxième signal.

6. Circuit de commande de suivi de trajectoire selon l'une quelconque des revendications 1 à 5, dans lequel lesdits moyens de coordination multiaxiale (5-i) détectent le signal ayant la plus grande valeur parmi lesdits premiers et deuxièmes signaux, et fournissent ledit signal ayant la plus grande valeur en tant que dite variation d'échelle de temps.

7. Circuit de commande de suivi de trajectoire selon l'une quelconque des revendications 1 à 6, ayant en outre des circuits de commande de limite admissible (12-i) pour faire varier au moins l'une ou l'autre de ladite limite d'accélération admissible et de ladite limite de vitesse admissible selon des variations dans la charge (13-i) dudit objet de la commande.

Fig. 1  PRIOR ART

Fig. 2

EP 0 596 241 B1

Fig. 3

1 — Input the Data DT, DV

2 — Generate the Velocity Reference $V_i(\tau)$

3 — $a_i(\tau) = \dfrac{V_i(\tau + \Delta\tau) - V_i(t)}{\Delta\tau}$

4 — Input the Value $A_i$, max

5 — $|a_i(\tau)| > A_i,\text{max}$ ? — No

Yes

6 — $S_{a,i}(\tau) = |a_i(\tau)|/A_i,\text{max}$     $S_{a,i}(\tau) = 1$ — 7

8 — Input the Value $V_i$, max

9 — $|V_i(\tau)| > V_i,\text{max}$ ? — No

Yes

10 — $S_{v,i}(\tau) = |V_i(\tau)|/V_i,\text{max}$     $S_{v,i}(\tau) = 1$ — 11

12 — $S(\tau) = \max_{1 \le i \le n} \left\{ S_{v,i}(\tau),\ S_{a,i}(\tau) \right\}$

13 — $V_i(t) = \dfrac{1}{S(\tau)}\ V_i(\tau)$

$t = \int_o^\tau S(\tau)\,d\tau$

# Fig. 4

...

$$\text{Fig. 5}$$

Fig. 6

Fig. 7

Fig. 8

Fig. 9

Fig.10

Fig. 11

Fig. 12

Fig. 13

Fig. 14

EP 0 596 241 B1

201  202  203  204

V1(t)

Angle Velocity
of the Motor 11-1

V2(t)

Angle Velocity
of the Motor 11-2

t

Time

t

Time

Fig. 15

Fig. 16

EP 0 596 241 B1